# EUROPEAN PATENT SPECIFICATION

(11) **EP 4 079 820 B1**
(45) Date of publication and mention of the grant of the patent: **10.09.2025**
(21) Application number: 20901967.8
(22) Date of filing: 17.12.2020
(51) Int. Cl.: C09D 133/04, C09J 123/08, C09D 123/08, B32B 7/12, B32B 15/01, B32B 37/12, C09J 11/00, C09D 7/40, C09J 133/04, B32B 37/06, C08F 220/06

(54) **ELECTRICAL STEEL SHEET ADHESIVE COATING COMPOSITION, ELECTRICAL STEEL SHEET LAMINATE, AND METHOD FOR MANUFACTURING SAME**
KLEBEBESCHICHTUNGSZUSAMMENSETZUNG FÜR ELEKTROBLECHE, ELEKTROBLECHLAMINAT UND VERFAHREN ZUM HERSTELLEN DAVON
COMPOSITION DE COUCHE ADHÉSIVE DE TÔLE D'ACIER ÉLECTRIQUE, STRATIFIÉ DE TÔLE D'ACIER ÉLECTRIQUE ET SON PROCÉDÉ DE FABRICATION

(30) Priority: 20.12.2019 KR 20190172209
(43) Date of publication of application: 26.10.2022
(73) Proprietor: POSCO, Pohang-si, Gyeongsangbuk-do 37859 (KR)
(72) Inventor: HA, Bongwoo, Pohang-si Gyeongsangbuk-do 37859 (KR); KIM, Jung-Woo, Pohang-si Gyeongsangbuk-do 37859 (KR); LEE, Dong-Gyu, Pohang-si Gyeongsangbuk-do 37859 (KR); NO, Taeyoung, Pohang-si Gyeongsangbuk-do 37859 (KR); PARK, Gyeongryeol, Pohang-si Gyeongsangbuk-do 37859 (KR)
(74) Representative: Meissner Bolte Partnerschaft mbB
(86) International application number: PCT/KR2020/018613
(87) International publication number: WO 2021/125859

(56) References cited:
- WO-A1-2010/061563
- KR-A- 19980 051 217
- KR-A- 20090 127 497
- KR-A- 20180 129 879
- KR-A- 20190 077 985
- KR-A- 20190 077 985
- US-A1- 2004 260 012
- US-A1- 2011 319 540
- US-B2- 8 349 446

## Description

### [Technical Field]

An exemplary embodiment of the present invention relates to an electrical steel sheet laminate. Particularly, an exemplary embodiment of the present invention relates to an electrical steel sheet laminate having a fusion layer formed thereon capable of adhering (fastening) an electrical steel sheet, without using a conventional fastening method such as welding, cramping, or interlocking. Particularly, an exemplary embodiment of the present invention relates to an electrical steel sheet laminate having improved adhesive strength between electrical steel sheets, by controlling the components of a fusion layer formed between the electrical steel sheets.

### [Background Art]

A non-directional electrical steel sheet is a steel sheet having uniform magnetic properties in all directions on a rolled sheet, and is widely used in a motor, an iron core of generators, an electric motor, a small transformer, and the like.

An electrical steel sheet may be divided into two types, one which should be subjected to stress relieving annealing (SRA) for improving magnetic properties after a punching process and the other one from which stress relieving annealing is omitted when a cost loss due to the heat treatment is large as compared with the effect of obtaining magnetic properties by stress relieving annealing.

An insulating coating film is a coating film coated in the finish manufacturing process of a laminate such as a motor, an iron core of generators, an electric motor, and a small transformer, and is usually required to have electrical properties to suppress occurrence of an eddy current. In addition, continuous punching processability, adhesion resistance, surface adhesion, and the like are required. Continuous punching processability refers to ability to suppress the wear of a mold, when an iron core is made by laminating many after punch processing into a predetermined shape. Adhesion resistance refers to ability not to adhere between iron core steel sheets after a stress relieving annealing process to remove processing stress of a steel sheet to recover magnetic properties.

In addition to the basic characteristics, excellent coating workability of a coating solution, solution stability to be used for a long time after blending, and the like are required. The insulating coating film may be manufactured into an electrical steel sheet laminate only by using a separate fastening method such as welding, cramping, and interlocking.

KR 2019 0077985 A relates to an electrical steel plate laminate, and a method of manufacturing the same. Specifically, it relates to an electric steel plate adhesive coating composition, an electric steel plate laminate, and a method for manufacturing the same, which improves the adhesion between the electric steel plates by controlling the composition and organic phase of the fusion layer formed between the electric steel plates.

### [Disclosure]

### [Technical Problem]

The present invention has been made in an effort to provide an electrical steel sheet laminate which forms a fusion layer capable of adhering (fastening) an electrical steel sheet without using a conventional fastening method such as welding, cramping, or interlocking, and a method of manufacturing the same. Specifically, an electrical steel sheet adhesive coating composition which has improved adhesive strength between electrical steel sheets by controlling the components of a fusion layer formed between the electrical steel sheets, an electrical steel sheet laminate, and a method for manufacturing the same are provided.

### [Technical Solution]

The invention is set out in the appended claims.

### [Advantageous Effects]

According to an exemplary embodiment of the present invention, the components of a fusion layer formed between electrical steel sheets may be controlled to improve adhesive strength between the electrical steel sheets.

According to an exemplary embodiment of the present invention, the stability of an adhesive coating composition may be improved.

According to an exemplary embodiment of the present invention, an electrical steel sheet may be adhered without using a conventional fastening method such as welding, cramping, or interlocking, and thus, the magnetism of an electrical steel sheet laminate is better.

### [Description of the Drawings]

FIG. 1 is a schematic view of an electrical steel sheet laminate.
FIG. 2 is an outline drawing of a cross-section of an electrical steel sheet laminate according to an exemplary embodiment of the present invention.
FIG. 3 is FT-IR data which analyzes the components of a fusion layer in Example 1.
FIG. 4 is differential calorimetry scanning (DSC) data which analyzes the components of a fusion layer in Example 1.

### [Mode for Invention]

In the present specification, the terms such as first, second, and third are used for describing various parts, components, areas, layers, and/or sections, but are not limited thereto. These terms are used only for distinguishing one part, component, area, layer, or section from other parts, components, areas, layers, or sections. Therefore, a first part, component, area, layer, or section described below may be mentioned as a second part, component, area, layer, or section without departing from the scope of the present invention.

The terminology used herein is only for mentioning a certain example, and is not intended to limit the present invention. Singular forms used herein also include plural forms unless otherwise stated clearly to the contrary. The meaning of "comprising" used in the specification is embodying certain characteristics, regions, integers, steps, operations, and/or components, but is not excluding the presence or addition of other characteristics, regions, integers, steps, operations, and/or components.

When it is mentioned that a part is present "on" the other part, the part may be present directly on the other part, or another part may be involved between them. In contrast, when it is mentioned that a part is present "directly on" the other part, there is no part interposed between them.

Though not defined otherwise, all terms including technical terms and scientific terms used herein have the same meaning as commonly understood by a person with ordinary skill in the art to which the present invention pertain. Terms defined in commonly used dictionaries are further interpreted as having a meaning consistent with the related technical literatures and the currently disclosed description, and unless otherwise defined, they are not interpreted as having an ideal or very formal meaning.

In the present specification, "substituted" means that, unless otherwise defined, at least one hydrogen of a compound is substituted by a C1 to C30 alkyl group; a C1 to C10 alkoxy group; a silane group; an alkylsilane group; an alkoxysilane group; or an ethyleneoxyl group.

In the present specification, "hetero" refers to, unless otherwise defined, an atom selected from the group consisting of N, O, S, and P.

The alkyl group may be a C1 to C20 alkyl group, specifically, a C1 to C6 lower alkyl group, a C7 to C10 intermediate alkyl group, or a C11 to C20 higher alkyl group.

For example, a C1 to C4 alkyl group means that there are 1 to 4 carbon atoms in an alkyl chain, and is selected from the group consisting of methyl, ethyl, propyl, isopropyl, n-butyl, isobutyl, sec-butyl, and t-butyl.

A typical alkyl group includes a methyl group, an ethyl group, a propyl group, an isopropyl group, a butyl group, an isobutyl group, a t-butyl group, a pentyl group, a hexyl group, a cyclopropyl group, a cyclobutyl group, a cyclopentyl group, a cyclohexyl group, and the like.

Hereinafter, exemplary embodiments of the invention will be described in more detail with reference to the accompanying drawings, so that a person with ordinary skill in the art to which the present invention pertains may easily carry out the present invention. However, the present invention may be implemented in various forms, and is not limited to the exemplary embodiments described herein.

The electrical steel sheet adhesive coating composition according to the present invention includes a polyethylene acrylate including a repeating unit represented by the following Chemical Formula 1 and a repeating unit represented by the following Chemical Formula 2: 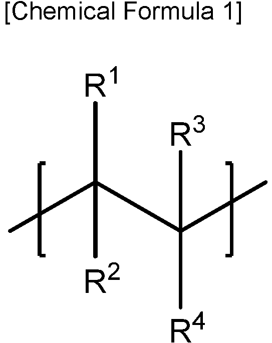 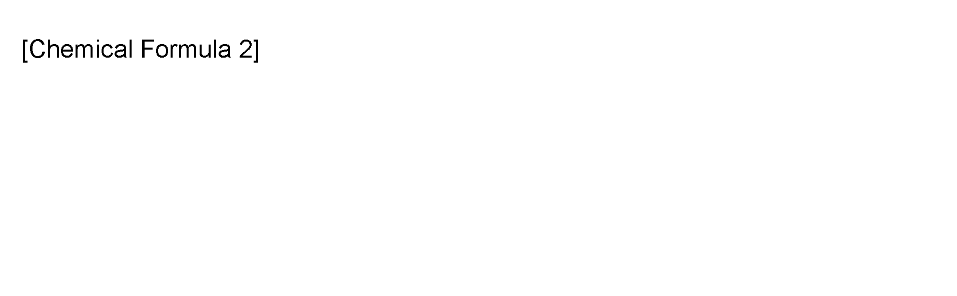 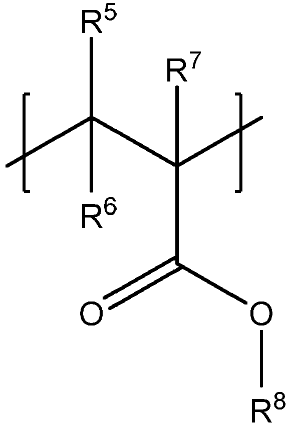 wherein R¹ to R⁷ are independently of one another hydrogen or a linear or branched alkyl group, and R⁸ is hydrogen, a linear or branched alkyl group, , a halogen atom, a carboxyl group, or a hydroxyl group.

The polyethylene acrylate forms a fusion layer in thermal fusion and is interposed between electrical steel sheets to impart adhesive strength between the electrical steel sheets. When the fusion layer does not appropriately impart adhesive strength between the electrical steel sheets, a plurality of electrical steel sheets which are precisely laminated are out of alignment in the course of the process. When a lamination position is out of alignment, the quality of a finally manufactured electrical steel sheet product is adversely affected. By securing adhesive strength after thermal fusion by a resin, the position of the laminated electrical steel sheets may be aligned.

Here, when a polyethylene acrylate is used among organic resins, at a temperature at or below a melting point of a polyethylene resin, the hardness of the surface of an adhesive layer is high by crystallization, so that damage of the adhesive layer due to friction with a processing line in processing (slitting, stamping) is minimized, and at a temperature of a melting point or higher, the flowability of the adhesive layer is rapidly increased, so that adhesive strength is better. In addition, an acrylate has excellent dispersibility in water in preparing a water dispersion coating solution and improves interfacial adhesive strength with the surface of an electrical steel sheet after coating.

The polyethylene acrylate represents, specifically, a polymerized form of polyethylene and acrylate in the form of copolymer. Here, the polyethylene exemplified above contributes to improvement of fusibility, insulating properties, and surface properties of the fusion layer. An acryl acid resin contributes to water dispersion of a coating solution and improvement of adhesion between the fusion layer and a non-directional electrical steel sheet. More specifically, the polyethylene acrylate includes a repeating unit represented by the following Chemical Formula 1 and a repeating unit represented by the following Chemical Formula 2. 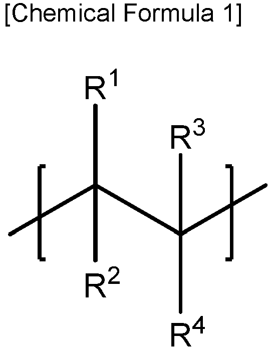 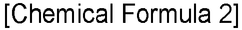 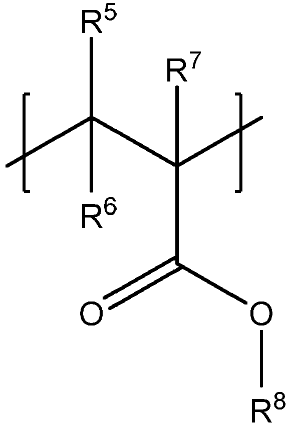 wherein R¹ to R⁷ are independently of one another hydrogen or a linear or branched alkyl group, and R⁸ is hydrogen, a linear or branched alkyl group, a halogen atom, a carboxyl group, or a hydroxyl group.

More specifically, in Chemical Formula 1 and Chemical Formula 2, R¹ to R⁷ may be independently of one another hydrogen or an alkyl group having 1 to 3 carbon atoms, and R⁸ may be hydrogen, an alkyl group having 1 to 6 carbon atoms, a halogen atom, a carboxyl group, or a hydroxyl group. More specifically, R¹ to R⁸ may be hydrogen.

The polyethylene acrylate includes 75 to 95 wt% of a polyethylene represented by Chemical Formula 1 and 5 to 25 wt% of an acrylate represented by Chemical Formula 2 with respect to 100 wt% of the polyethylene acrylate. When there is too little polyethylene, fusibility is deteriorated, and on the contrary, when there is too much polyethylene, the water dispersibility of a coating composition and adhesion between the fusion layer and the electrical steel sheet may be deteriorated. More specifically, 80 to 90 wt% of the polyethylene represented by Chemical Formula 1 and 10 to 20 wt% of the acrylate represented by Chemical Formula 2 may be included.

The electrical steel sheet adhesive coating composition according to the present invention may further include 5 to 20 parts by weight of inorganic particles, with respect to 100 parts by weight of the polyethylene acrylate. The inorganic particles contribute to improvement of adhesive strength at a high temperature. When the inorganic particles are included too little, adhesive strength at a high temperature may be deteriorated, and when added too much, fusibility at a low temperature may be deteriorated. Here, a part by weight refers to a relative weight ratio to the content of polyethylene acrylate.

The inorganic particles may include one or more of SiO₂, Al₂O₃, TiO₂, MgO, ZnO, and ZrO₂.

The inorganic particles may have an average particle size of 10 to 50 nm. Appropriate dispersibility may be secured in the range described above.

The inorganic particles may be substituted on a part of functional groups in the polyethylene acrylate. When the inorganic particles are not bonded to polyethylene acrylate and added alone, inorganic particles are agglomerated with each other and dispersion is not performed. The meaning of being bonded to polyethylene acrylate is that inorganic particles are substituted on and bonded to the functional group of polyethylene acrylate.

The electrical steel sheet adhesive coating composition according to an exemplary embodiment of the present invention may further include 0.5 to 2.5 parts by weight of a curing agent with respect to 100 parts by weight of the polyethylene acrylate. The curing agent serves to adjust the reactivity of the surface of the adhesive coating layer. When the curing agent is included too little, a curing reaction on the fusion layer may be reduced to deteriorate stickiness of the surface of the fusion layer. On the contrary, when the curing agent is added too much, a fastening force after fusion at a low temperature may be deteriorated. More specifically, 1 to 1.5 parts by weight of the curing agent may be further included.

The curing agent may include an aliphatic amine-based curing agent, an aromatic amine-based curing agent, an aminoamine-based curing agent, or an imidazole-based curing agent. More specifically, the curing agent may include dicyandiamide.

The electrical steel sheet adhesive coating composition according to an exemplary embodiment of the present invention may further include 0.5 to 1.5 mol of a neutralizing agent with respect to 1 mol of polyethylene acrylate. The neutralizing agent imparts a charge by a reaction with an acrylic acid which is an acid to serve to perform dispersion in water. When the neutralizing agent is included too little, water dispersion stability may be deteriorated, and when the neutralizing agent is included too much, coating adhesion after coating may be deteriorated. More specifically, 1 to 1.5 mol of the neutralizing agent may be further included.

The neutralizing agent may include an amine and alcohols-based basic neutralizing agent. More specifically, one or more of triethylamine, 2-amino-2-metyl-1-propanol, and ammonia water may be used. More specifically, a neutralizing agent having a boiling point of 50 to 150°C may be used.

In addition to the components, the adhesive coating composition may include a solvent for facilitating coating and uniformly dispersing the components.

In an exemplary embodiment of the present invention, an electrical steel sheet laminate is provided.

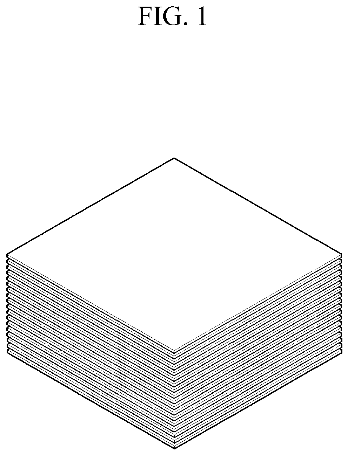

The electrical steel sheet laminate according to an exemplary embodiment of the present invention includes a plurality of electrical steel sheets; and fusion layer placed between the plurality of electrical steel sheets. FIG. 1 is a schematic view of the electrical steel sheet laminate according to an exemplary embodiment of the present invention. As shown in FIG. 1, it is in the form of a plurality of electrical steel sheets being laminated.

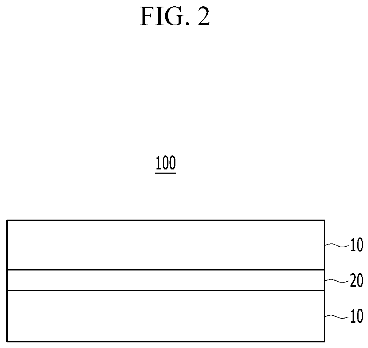

FIG. 2 is an outline drawing of a cross-section of the electrical steel sheet laminate according to an exemplary embodiment of the present invention. As shown in FIG. 2, an electrical steel sheet laminate 100 according to an exemplary embodiment of the present invention includes a plurality of electrical steel sheets 10; and a fusion layer 20 placed between the plurality of electrical steel sheets.

The electrical steel sheet laminate according to an exemplary embodiment of the present invention may be a laminate obtained by thermally fusing different electrical steel sheets from each other, by forming the fusion layer simply using the adhesive coating composition described above, without using a conventional method such as welding, cramping, or interlocking.

Here, the electrical steel sheet laminate may have excellent adhesion at a high temperature and excellent oil resistance at a high temperature even after thermal fusion.

Hereinafter, each configuration will be described in detail.

As the electrical steel sheet 10, a general non-directional or directional electrical steel sheet may be used without limitation. In an exemplary embodiment of the present invention, it is the main configuration that a fusion layer 20 is formed between a plurality of electrical steel sheets 10 to manufacture an electrical steel sheet laminate 100, and thus, the detailed description of the electrical steel sheet 10 will be omitted.

The fusion layer 20 is formed between a plurality of electrical steel sheets 10, and has high adhesive strength so that a plurality of electrical steel sheets 10 may be adhered without using a conventional fastening method such as welding, cramping, or interlocking.

The fusion layer 20 may be formed by coating the adhesive coating composition on the surface, curing the composition to form an adhesive coating layer, and performing lamination and thermal fusion to form the fusion layer 20. When a plurality of electrical steel sheets 10 having the adhesive coating layer formed is laminated and thermally fused, a resin composition in the adhesive coating layer is thermally fused to form the fusion layer. The fusion layer includes a small amount of an inorganic metal compound in the main component of an organic material. The inorganic component is uniformly dispersed in the organic material in the fusion layer to form a fine phase.

In an exemplary embodiment of the present invention, the fusion layer 20 includes polyethylene acrylate. Since polyethylene acrylate is described in detail regarding the adhesive coating composition, overlapping description will be omitted. Polyethylene acrylate remains as it is in the process of forming the fusion layer. In addition, inorganic particles and a curing agent also remain.

Therefore, the fusion layer may include 100 parts by weight of the polyethylene acrylate, 5 to 20 parts by weight of the inorganic particles, and 0.5 to 2.5 parts by weight of the curing agent. The neutralizing agent is evaporated during curing and thermal fusion, and thus, does not remain in the fusion layer 20.

The fusion layer 20 may have a thickness of 0.1 to 5 µm. When the thickness of the fusion layer is too small, adhesive strength may be rapidly deteriorated, and when the thickness if too large, defects by stickiness after coating and winding may be problematic. More specifically, the fusion layer 20 may have a thickness of 2 to 3 µm.

A method for manufacturing an electrical steel sheet laminate according to an exemplary embodiment of the present invention includes: applying an adhesive coating composition on one surface or both surfaces of an electrical steel sheet and curing the composition to form an adhesive coating layer; and laminating a plurality of electrical steel sheets having the adhesive coating layer formed thereon and performing thermal fusion to form a fusion layer.

Hereinafter, each step will be described in detail.

First, an adhesive coating composition is prepared. Since the adhesive coating composition is described above, overlapping description will be omitted.

Next, the adhesive coating composition is coated on the surface of the electrical steel sheet and cured to form an adhesive coating layer. This step may be performed in a temperature range of 150 to 250°C for curing the adhesive coating composition.

The plurality of electrical steel sheets having the adhesive coating layer formed thereon are laminated and thermally fused to form a fusion layer 20. Polymer components in the adhesive coating layer is thermally fused by the thermal fusion step to form the fusion layer.

The thermal fusion layer may be performed at a temperature of 150 to 250°C under a pressure of 0.05 to 5.0 MPa and under pressure conditions of 0.1 to 120 minutes. The conditions may be independently of each other satisfied, and two or more conditions may be simultaneously satisfied. By adjusting temperature, pressure, and time conditions in the thermal fusion step as such, thermal fusion may be densely performed without a gap or an organic material between the electrical steel sheets.

The step of thermal fusion includes a heating step and a fusion step, and a heating rate in the heating step may be 10°C/min to 1000°C/min.

Hereinafter, the preferred example of the present invention, the comparative examples thereto, and the evaluation examples thereof will be described. However, the following examples are only preferred examples of the present invention, and the present invention is not limited to the following examples.

### Experimental Example 1

A non-directional electrical steel sheet (50×50 mm, 0.35 mmt) was prepared as a blank specimen. An adhesive coating solution was applied at a certain thickness on the upper portion and the lower portion of each of the blank specimens prepared using a bar coater and a roll coater, cured at 200 to 250°C based on a plate temperature for 20 seconds, and then slowly cooled in the air, thereby forming an adhesive coating layer.

The adhesive coating composition included 100 parts by weight of polyethylene acrylic acid, 1 mol of a neutralizing agent (triethylamine) with respect to the polyethylene acrylic acid, 10 parts by weight of silica particles (particle diameter: about 30 nm), and 1 part by weight of a curing agent (dicyandiamide), as summarized in the following Table 1.

Polyethylene and acrylic acid are represented by the following chemical formula:

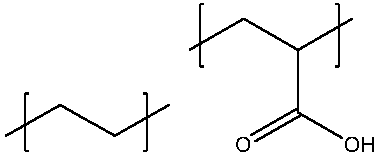

An electrical steel sheet having an adhesive coating layer coated thereon was laminated at a height of 20 mm, the laminate was pressed with a force of 0.1 MPa, and thermal fusion was performed at 120°C for 10 minutes. The adhesive strength between the components of the thermal fusion layer and the thermally fused electrical steel sheet was measured by a shear tension method and is summarized in the following Table 1. The thickness of the fusion layer after thermal fusion was about 3 µm.

The specific evaluation conditions thereof are as follows.

**Water dispersion stability:** An adhesive coating solution was maintained at 60°C for 72 hours, and when no precipitation or agglomeration occurred in the coating solution, it was indicated as good (∘), and when agglomeration occurred of resin in the solution occurred, it was indicated as poor (×).

**Adhesive strength:** A specimen specification for shear test (shear strength) measurement was manufactured in accordance with ISO 4587. Two sheets of a specimen of 25×100 mm were adhered with an area of 12.5×25 mm², and thermal fusion was performed under the conditions to manufacture a shear test specimen.

A specimen specification for peeling test (T-peel off) measurement was manufactured in accordance with ISO 11339. Two sheets of a specimen of 25×200 mm were adhered with an area of 25×150 mm², and a non-adhesive region was bent at 90° to manufacture a T-shaped tensile specimen.

The specimen manufactured by a shear test and a peeling test (T-peel off) was fixed to a jig in the upper/lower portion at a certain force, and a tensile force of the laminated sample was measured using a measuring device while pulling the specimen at a certain speed. At this time, in the shear test, the measured value was measured at a point at which an interface having a minimum adhesive strength in the interface of the laminated sample is released. In the peeling test, the measurement was performed as an average value of points excluding the first and last 10% of with a certain force measured at peeling.

**Shear adhesive strength after fusion at low temperature:** A specimen specification was manufactured in accordance with ISO4587 of the shear test specimen specification, and was pressed with a force of 1 MPa in the thermal fusion and was thermally fused at 140°C for 30 minutes. After the thermal fusion, the measurement was performed by the shear test.

**High temperature shear adhesive strength:** When the measurement was performed with the shear test, the temperature of the specimen was maintained at 60°C by a heating device, and then adhesive strength was measured.

**Stickiness:** An electrical steel sheet having an adhesive coating layer coated thereon was laminated at a height of 20 mm, the laminate was pressed at a force of 1 MPa and thermally fused at 70°C for 30 minutes, and then presence or absence of stickiness was determined by the traces from adhesion when the steel sheet was released.

**(Table 1)**

| Classific ation | Type of fusion layer resin | | Content in polyethylen e acrylic acid (wt%) | | Water disper sion stabilit y | Adhesive strength | | |
|---|---|---|---|---|---|---|---|---|
| | Polyeth ylene acrylic acid resin | Epox y poly mer | Ethyl ene | Acr ylic acid | | Shear adhesive strength( MPa) | Peel adhe sive stren gth (N/m m) | Adhesiv e strengt h after fusion at low temper ature (MPa) |
| Example 1 | O | - | 80 | 20 | O | 9 | 3 | 7 |
| Example 2 | O | - | 90 | 10 | O | 8.5 | 2 | 6 |
| Compar ative Example 1 | - | O | - | - | O | 7.5 | 0.3 | 0.5 |
| Compar ative Example 2 | O | X | 70 | 30 | O | 6.5 | 0.5 | 0.8 |
| Compar ative Example 3 | O | 0 | 97 | 3 | X | 9 | 3 | 8 |

As shown in Table 1, when a polyethylene acrylic acid resin was used as a fusion layer resin and a content ratio of ethylene and acrylic acid included therein was appropriately adjusted as in Examples 1 and 2, excellent shear adhesive strength and peel adhesive strength were shown.

**It** was confirmed in Comparative Example 1 that when an epoxy resin was used instead of the polyethylene acrylic acid resin, shear adhesive strength was excellent, but peel adhesive strength and adhesive strength after fusion at a low temperature were poor.

**It** was confirmed in Comparative Example 2 that when an erylene content ratio in the polyethylene acryl acid resin was somewhat low, shear adhesive strength was excellent, but peel adhesive strength and adhesive strength after fusion at a low temperature were poor.

It was confirmed in Comparative Example 3 that when an acrylic acid content ratio in the polyethylene acrylic acid resin was low, shear adhesive strength, peel adhesive strength, and adhesive strength after fusion at a low temperature were excellent, but water dispersion stability in the preparation of a coating solution was poor.

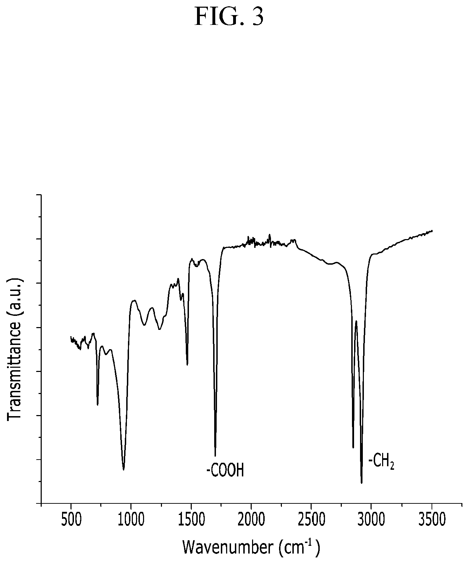

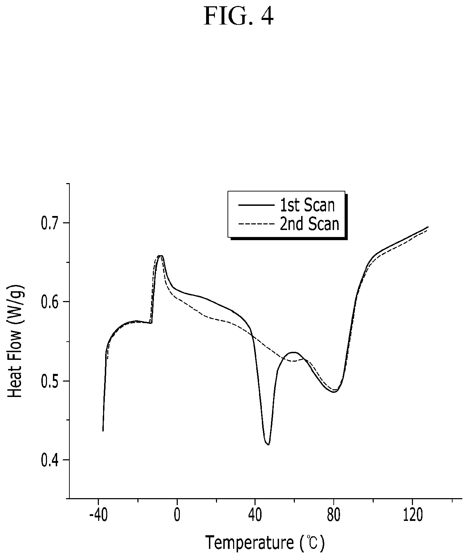

FIGS. 3 and 4 show the FT-IR data and the differential calorimetry scanning data of the fusion layer manufactured in Example 1.

In FIG. 3, a peak is observed around 1700 cm⁻¹, which represents a - COOH structure in polyethylene acrylate, and the ratio may be confirmed from the area. In addition, in FIG. 3, peaks are observed around 2850 cm⁻¹ and around 2920 cm⁻¹, which represents -CH₂ structure in polyethylene acrylate, and the ratio may be confirmed from the area.

Meanwhile, in FIG. 4, a peak by melting of a polyethylene acrylate crystal structure may be confirmed around 80°C. In addition, at 1^{st} scan, a clear peak was confirmed at 45°C, but at 2^{nd} scan, it was confirmed that the peak was significantly decreased, and this may be confirmed by the peak shown in the aligned structure of polyethylene acrylate.

### Experimental Example 2

The process was performed in the same manner as in Experimental Example 1 described above, except that the component content in the adhesive coating composition and the thickness of the fusion layer were changed.

**(Table 2)**

| Classific ation | Silic a parti cle (part by weig ht) | Curi ng agen t (part by weig ht) | Thickn ess of fusion layer (µm) | Adhesive strength | | | | Stickin ess |
|---|---|---|---|---|---|---|---|---|
| | | | | Shear adhes ive streng th (MPa) | Peel adhes ive streng th (N/m m) | Shear adhesiv e strength at high tempera ture (MPa) | Adhesiv e strength after fusion at low tempera ture (MPa) | |
| Example 1 | 10 | 1 | 3 | 9 | 3 | 2 | 7 | 0 |
| Example 3 | 5 | 1.5 | 3 | 5 | 1.5 | 3 | 2 | 0 |
| Compar ative Example 4 | 0 | 1 | 3 | 8 | 3 | 0.8 | 6 | 0 |
| Compar ative Example 5 | 2 | 0 | 3 | 4 | 2 | 1.5 | 4 | X |
| Compar ative Example 6 | 30 | 1 | 2 | 5 | 0.8 | 1.2 | 0.8 | 0 |
| Compar ative Example 7 | 10 | 3 | 0.3 | 7 | 3 | 2 | 0.5 | 0 |
| Compar ative Example 8 | 10 | 1 | 10 | 8 | 3 | 3 | 5 | X |

As shown in Table 2, as in Examples 1 and 3, when addition of nanosilica and the curing agent, and the thickness of the coating layer were appropriate, shear adhesive strength, peel adhesive strength, shear adhesive strength at a high temperature, and adhesive strength after fusion at a low temperature were excellent, and stickiness was also excellent.

In Comparative Example 4 in which no nanosilica was added, it was confirmed that shear adhesive strength, peel adhesive strength, adhesive strength after fusion at a low temperature, and stickiness were excellent, but shear adhesive strength at a high temperature was poor.

In Comparative Example 5 in which no curing agent was added, it was found that shear adhesive strength, peel adhesive strength, adhesive strength after shearing at a high temperature, and adhesive strength after fusion at a low temperature were excellent, but stickiness was poor.

In Comparative Example 6 in which an excessive amount of nanosilica was added, it was confirmed that shear adhesive strength, shear adhesive strength at a high temperature, and stickiness were good, but peel adhesive strength and adhesive strength after fusion at a low temperature were poor.

In Comparative Example 7 in which an excessive amount of the curing agent was added, it was confirmed that fastening force was poor after fusion at a low temperature.

In Comparative Example 8 in which the coating thickness was large, it was confirmed that stickiness was poor.

The present invention is not limited to the exemplary embodiments, but may be produced in various forms different from each other. A person with ordinary skill in the art to which the present invention pertains will understand that the present invention may be carried out in other specific forms without changing the spirit or the essential feature of the present invention. Therefore, the exemplary embodiments described above should be understood to be illustrative in all respects, and not to be restrictive.

### Reference signs list

| | | | |
|---|---|---|---|
| 100: | Electrical steel sheet laminate | 10: | Electrical steel sheet |
| 20: | Fusion layer | | |

## Claims

1. An electrical steel sheet adhesive coating composition comprising: 100 parts by weight of a polyethylene acrylate including a repeating unit represented by the following Chemical Formula 1 and a repeating unit represented by the following Chemical Formula 2, and 5 to 20 parts by weight of inorganic particles,
wherein the polyethylene acrylate includes 75 to 95 wt% of the repeating unit represented by the following Chemical Formula 1 and 5 to 25 wt% of the repeating unit represented by the following Chemical Formula 2: 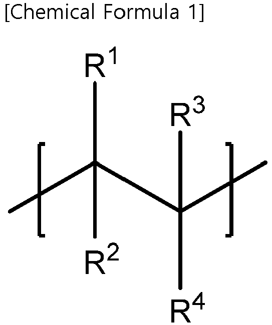 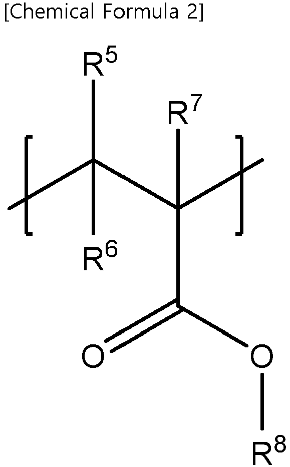
wherein R¹ to R⁷ are independently of one another hydrogen or a linear or branched alkyl group, and R⁸ is hydrogen, a linear or branched alkyl group, a halogen atom, a carboxyl group, or a hydroxyl group.

2. The electrical steel sheet adhesive coating composition of claim 1, wherein:
the inorganic particles include one or more of SiO₂, Al₂O₃, TiO₂, MgO, ZnO, and ZrO₂.

3. The electrical steel sheet adhesive coating composition of claim 1, further comprising:
0.5 to 2.5 parts by weight of a curing agent
with respect to 100 parts by weight of the polyethylene acrylate.

4. The electrical steel sheet adhesive coating composition of claim 1, further comprising:
0.5 to 1.5 mol of a neutralizing agent
with respect to 1 mol of the polyethylene acrylate.

5. The electrical steel sheet adhesive coating composition of claim 4, wherein:
the neutralizing agent has a boiling point of 50 to 150°C.

6. An electrical steel sheet laminate comprising:
a plurality of electrical steel sheets; and
a fusion layer placed between the plurality of electrical steel sheets,
wherein the fusion layer includes 100 parts by weight of a polyethylene acrylate including a repeating unit represented by the following Chemical Formula 1 and a repeating unit represented by the following Chemical Formula 2, and 5 to 20 parts by weight of inorganic particles, and
the polyethylene acrylate includes 75 to 95 wt% of the repeating unit represented by the following Chemical Formula 1 and 5 to 25 wt% of the repeating unit represented by the following Chemical Formula 2: 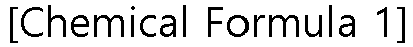 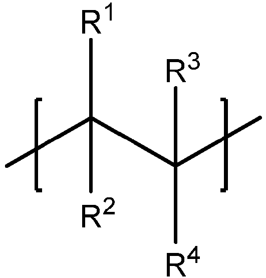 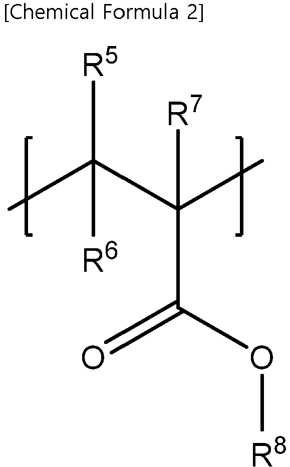
wherein R¹ to R⁷ are independently of one another hydrogen or a linear or branched alkyl group, and R⁸ is hydrogen, a linear or branched alkyl group, a halogen atom, a carboxyl group, or a hydroxyl group.

7. The electrical steel sheet laminate of claim 6, wherein:
the fusion layer has a thickness of 0.1 to 5 µm.

8. A method for manufacturing an electrical steel sheet laminate, the method comprising:
applying an adhesive coating composition on one surface or both surfaces of an electrical steel sheet and curing the composition to form an adhesive coating layer; and
laminating a plurality of electrical steel sheets having the adhesive coating layer formed thereon and performing thermal fusion to form a fusion layer;
wherein the fusion layer includes 100 parts by weight of a polyethylene acrylate including a repeating unit represented by the following Chemical Formula 1 and a repeating unit represented by the following Chemical Formula 2, and 5 to 20 parts by weight of inorganic particles, and
the polyethylene acrylate includes 75 to 95 wt% of the repeating unit represented by the following Chemical Formula 1 and 5 to 25 wt% of the repeating unit represented by the following Chemical Formula 2: 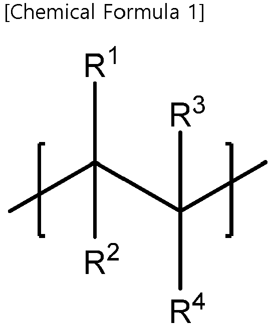 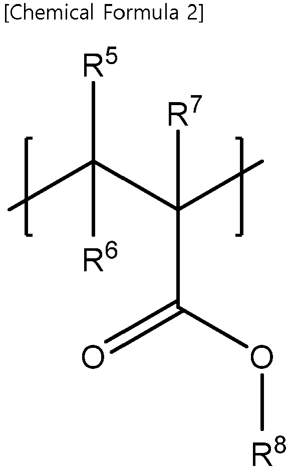
wherein R¹ to R⁷ are independently of one another hydrogen or a linear or branched alkyl group, and R⁸ is hydrogen, a linear or branched alkyl group, a halogen atom, a carboxyl group, or a hydroxyl group.

9. The method for manufacturing an electrical steel sheet laminate of claim 8, wherein:
in the forming of an adhesive coating layer, the curing is performed at a temperature of 150 to 250°C.

## Patentansprüche

1. Klebebeschichtungszusammensetzung für Elektrostahlblech, umfassend: 100 Gewichtsteile eines Polyethylenacrylats, beinhaltend eine Wiederholungseinheit, die durch die folgende chemische Formel 1 dargestellt ist, und eine Wiederholungseinheit, die durch die folgende chemische Formel 2 dargestellt ist, und 5 bis 20 Gewichtsteile anorganischer Partikel,
wobei das Polyethylenacrylat 75 bis 95 Gew.-% der Wiederholungseinheit, die durch die folgende chemische Formel 1 dargestellt ist, und 5 bis 25 Gew.-% der Wiederholungseinheit, die durch die folgende chemische Formel 2 dargestellt ist, beinhaltet: 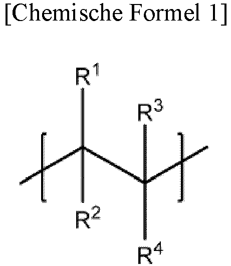 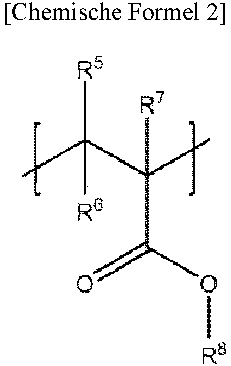
wobei R¹ bis R⁷ unabhängig voneinander Wasserstoff oder eine lineare oder verzweigte Alkylgruppe sind und R⁸ Wasserstoff, eine lineare oder verzweigte Alkylgruppe, ein Halogenatom, eine Carboxylgruppe oder eine Hydroxylgruppe ist.

2. Klebebeschichtungszusammensetzung für Elektrostahlblech nach Anspruch 1, wobei:
die anorganischen Partikel eines oder mehrere aus SiO₂, Al₂O₃, TiO₂, MgO, ZnO und ZrO₂ beinhalten.

3. Klebebeschichtungszusammensetzung für Elektrostahlblech nach Anspruch 1, ferner umfassend:
0,5 bis 2,5 Gewichtsteile eines Härtungsmittels
in Bezug auf 100 Gewichtsteile des Polyethylenacrylats.

4. Klebebeschichtungszusammensetzung für Elektrostahlblech nach Anspruch 1, ferner umfassend:
0,5 bis 1,5 mol eines Neutralisierungsmittels
in Bezug auf 1 mol des Polyethylenacrylats.

5. Klebebeschichtungszusammensetzung für Elektrostahlblech nach Anspruch 4, wobei:
das Neutralisierungsmittel einen Siedepunkt von 50 bis 150 °C aufweist.

6. Elektrostahlblechlaminat, umfassend:
eine Vielzahl von Elektrostahlblechen; und
eine Fusionsschicht, die zwischen der Vielzahl von Elektrostahlblechen angeordnet ist,
wobei die Fusionsschicht 100 Gewichtsteile eines Polyethylenacrylats, das eine Wiederholungseinheit, die durch die folgende chemische Formel 1 dargestellt ist, und eine Wiederholungseinheit, die durch die folgende chemische Formel 2 dargestellt ist, und 5 bis 20 Gewichtsteile anorganischer Partikel beinhaltet und das Polyethylenacrylat 75 bis 95 Gew.-% der Wiederholungseinheit, die durch die folgende chemische Formel 1 dargestellt ist, und 5 bis 25 Gew.-% der Wiederholungseinheit, die durch die folgende chemische Formel 2 dargestellt ist, beinhaltet: 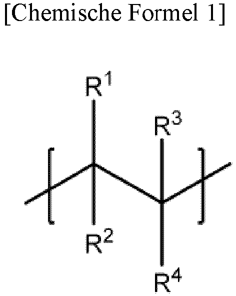 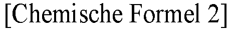 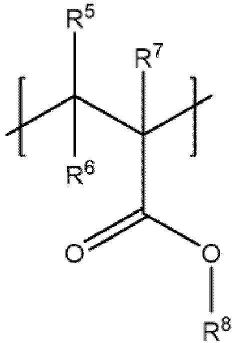
wobei R¹ bis R⁷ unabhängig voneinander Wasserstoff oder eine lineare oder verzweigte Alkylgruppe sind und R⁸ Wasserstoff, eine lineare oder verzweigte Alkylgruppe, ein Halogenatom, eine Carboxylgruppe oder eine Hydroxylgruppe ist.

7. Elektrostahlblechlaminat nach Anspruch 6, wobei:
die Fusionsschicht eine Dicke von 0,1 bis 5 µm aufweist.

8. Verfahren zum Herstellen eines Elektrostahlblechlaminats, wobei das Verfahren Folgendes umfasst:
Auftragen einer Klebebeschichtungszusammensetzung auf eine Oberfläche oder beide Oberflächen eines Elektrostahlblechs und Härten der Zusammensetzung, um eine Klebebeschichtungsschicht zu bilden; und
Laminieren einer Vielzahl von Elektrostahlblechen, auf denen die Klebebeschichtungsschicht gebildet ist, und Durchführen von thermischer Fusion, um eine Fusionsschicht zu bilden;
wobei die Fusionsschicht 100 Gewichtsteile eines Polyethylenacrylats, beinhaltend eine Wiederholungseinheit, die durch die folgende chemische Formel 1 dargestellt ist, und eine Wiederholungseinheit, die durch die folgende chemische Formel 2 dargestellt ist, und 5 bis 20 Gewichtsteile anorganischer Partikel beinhaltet und
das Polyethylenacrylat 75 bis 95 Gew.-% der Wiederholungseinheit, die durch die folgende chemische Formel 1 dargestellt ist, und 5 bis 25 Gew.-% der Wiederholungseinheit, die durch die folgende chemische Formel 2 dargestellt ist, beinhaltet: 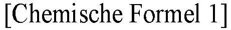 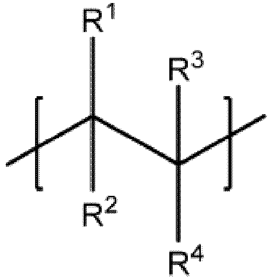 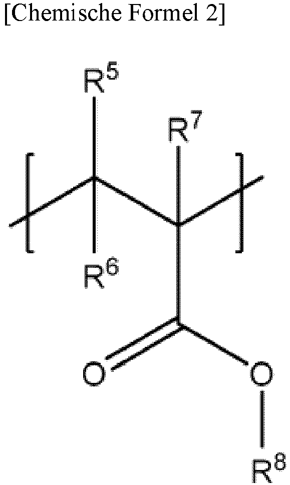
wobei R¹ bis R⁷ unabhängig voneinander Wasserstoff oder eine lineare oder verzweigte Alkylgruppe sind und R⁸ Wasserstoff, eine lineare oder verzweigte Alkylgruppe, ein Halogenatom, eine Carboxylgruppe oder eine Hydroxylgruppe ist.

9. Verfahren zum Herstellen eines Elektrostahlblechlaminats nach Anspruch 8, wobei:
beim Bilden einer Klebebeschichtungsschicht das Härten bei einer Temperatur von 150 bis 250 °C durchgeführt wird.

## Revendications

1. Composition de revêtement adhésif pour tôle d'acier électrique comprenant : 100 parties en poids d'un acrylate de polyéthylène incluant un motif répété représenté par la formule chimique 1 suivante et un motif répété représenté par la formule chimique 2 suivante, et 5 à 20 parties en poids de particules inorganiques,
dans laquelle l'acrylate de polyéthylène inclut 75 à 95 % en poids du motif répété représenté par la formule chimique 1 suivante et 5 à 25 % en poids du motif répété représenté par la formule chimique 2 suivante : 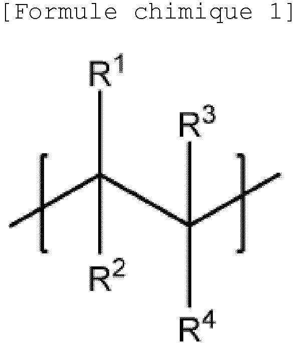 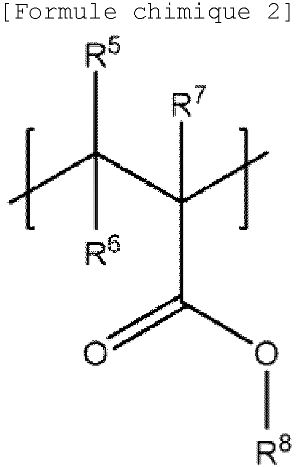
dans laquelle R¹ à R⁷ sont indépendamment les uns des autres hydrogène ou un groupe alkyle linéaire ou ramifié,
et R⁸ est hydrogène, un groupe alkyle linéaire ou ramifié, un atome d'halogène, un groupe carboxyle ou un groupe hydroxyle.

2. Composition de revêtement adhésif pour tôle d'acier électrique selon la revendication 1, dans laquelle :
les particules inorganiques incluent un ou plusieurs parmi SiO₂, Al₂O₃, TiO₂, MgO, ZnO et ZrO₂.

3. Composition de revêtement adhésif pour tôle d'acier électrique selon la revendication 1, comprenant en outre :
0,5 à 2,5 parties en poids d'un agent de durcissement
par rapport à 100 parties en poids de l'acrylate de polyéthylène.

4. Composition de revêtement adhésif pour tôle d'acier électrique selon la revendication 1, comprenant en outre :
0,5 à 1,5 mol d'un agent neutralisant
par rapport à 1 mol de l'acrylate de polyéthylène.

5. Composition de revêtement adhésif pour tôle d'acier électrique selon la revendication 4, dans laquelle :
l'agent neutralisant a un point d'ébullition de 50 à 150 °C.

6. Stratifié de tôle d'acier électrique comprenant :
une pluralité de tôles d'acier électrique ; et
une couche de fusion placée entre la pluralité de tôles d'acier électrique,
dans lequel la couche de fusion inclut 100 parties en poids d'un acrylate de polyéthylène incluant un motif répété représenté par la formule chimique 1 suivante et un motif répété représenté par la formule chimique 2 suivante, et 5 à 20 parties en poids de particules inorganiques, et l'acrylate de polyéthylène inclut 75 à 95 % en poids du motif répété représenté par la formule chimique 1 suivante et 5 à 25 % en poids du motif répété représenté par la formule chimique 2 suivante : 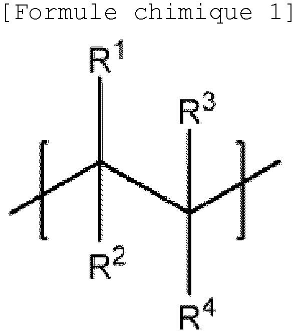 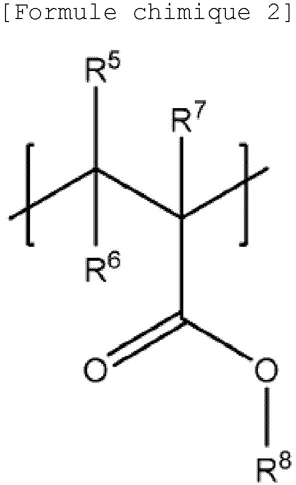
dans lequel R¹ à R⁷ sont indépendamment les uns des autres hydrogène ou un groupe alkyle linéaire ou ramifié,
et R⁸ est hydrogène, un groupe alkyle linéaire ou ramifié, un atome d'halogène, un groupe carboxyle ou un groupe hydroxyle.

7. Stratifié de tôle d'acier électrique selon la revendication 6, dans lequel :
la couche de fusion a une épaisseur de 0,1 à 5 µm.

8. Procédé de fabrication d'un stratifié de tôle d'acier électrique, le procédé comprenant :
l'application d'une composition de revêtement adhésif sur une surface ou les deux surfaces d'une tôle d'acier électrique et le durcissement de la composition pour former une couche de revêtement adhésif ; et
la stratification d'une pluralité de tôles d'acier électrique sur lesquelles est formée la couche de revêtement adhésif
et la réalisation d'une fusion thermique pour former une couche de fusion ;
dans lequel la couche de fusion inclut 100 parties en poids d'un acrylate de polyéthylène incluant un motif répété représenté par la formule chimique 1 suivante et un motif répété représenté par la formule chimique 2 suivante, et 5 à 20 parties en poids de particules inorganiques, et l'acrylate de polyéthylène inclut 75 à 95 % en poids du motif répété représenté par la formule chimique 1 suivante et 5 à 25 % en poids du motif répété représenté par la formule chimique 2 suivante : 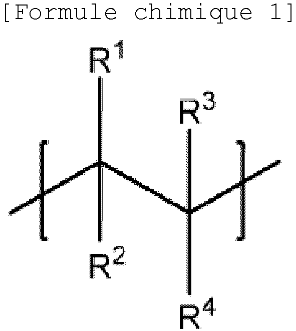 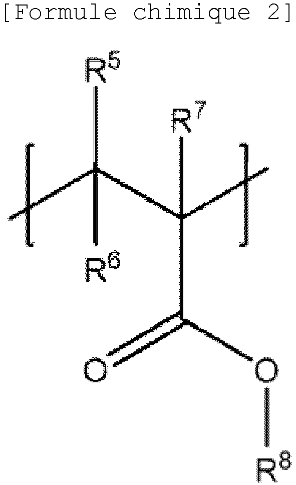
dans lequel R¹ à R⁷ sont indépendamment les uns des autres hydrogène ou un groupe alkyle linéaire ou ramifié,
et R⁸ est hydrogène, un groupe alkyle linéaire ou ramifié, un atome d'halogène, un groupe carboxyle ou un groupe hydroxyle.

9. Procédé de fabrication d'un stratifié de tôle d'acier électrique selon la revendication 8, dans lequel :
lors de la formation d'une couche de revêtement adhésif, le durcissement est réalisé à une température de 150 à 250 °C.
